# EUROPEAN PATENT SPECIFICATION

(11) **EP 0 731 673 B1**
(45) Date of publication and mention of the grant of the patent: **30.05.2001**
(21) Application number: 95934383.1
(22) Date of filing: 03.10.1995
(51) Int. Cl.: A61C 13/00

(54) **METHOD AND DEVICE FOR A PRODUCT INTENDED TO BE INTRODUCED INTO THE HUMAN BODY.**
VERFAHREN UND VORRICHTUNG FÜR EIN PRODUKT , VORGESEHEN UM IN DEN MENSCHLICHEN KÖRPER EINGEFÜHRT ZU WERDEN
PROCEDE ET DISPOSITIF CONCUS POUR UN PRODUIT DESTINE A ETRE INTRODUIT DANS LE CORPS HUMAIN

(30) Priority: 04.10.1994 SE 9403345
(43) Date of publication of application: 18.09.1996
(73) Proprietor: Nobel Biocare AB (reg. no. 556002-0231), 402 26 Göteborg (SE)
(72) Inventor: ANDERSSON, Matts, S-443 39 Lerum (SE); PERSSON, Magnus, S-462 60 Vänersborg (SE)
(74) Representative: Olsson, Gunnar
(86) International application number: PCT/SE95/01131
(87) International publication number: WO 96/10371

(56) References cited:
- EP-A- 0 025 911
- EP-A- 0 541 500

## Description

### TECHNICAL FIELD

The present invention relates to a method for manufacturing a product which can be used in the human body, preferably a dental bridge, with the aid of a model comprising different parts, for example preparations, and utilizing a scanning unit by means of which the contours of the parts are scanned and represented by electrical (digital) representations, and a computer unit having a computer screen which operates with data/information items which are related to the representations and therefore to said contours and which are arranged in files. With the aid of a computer program, for example a CAD program, the computer processes the said data in cooperation with an operator in order to represent, on the computer screen, a construction which is based on the scanned representations, whereby processing information representing the said construction being obtained from the computer unit for use in equipment for manufacturing the product. The invention also relates to a device according to the preamble of the following claim 8.

### STATE OF THE ART

In the manufacture of dental bridges, for example, it is already known to use a scanning unit and computer for simulating a construction based on the scanning. The computer can also, in a known case, calculate machining coordinates for production of the construction in question.

In EP-A 541 500 it is disclosed a sensor-apparatus for sensing the contours of only one tooth and thereafter controlling a milling-tool. This reference doesn't discuss how to adjust several tooth-models in relation to each other or how to perform the registration of mutual positions of several casts of teeth.

EP-A-25911 shows that it is possible to obtain relative positions of several teeth in a row in a model. The reference shows the use of overlapping pictures of the entire model taken by means of a camera. A computer generates image information signals by means of said pictures. The relative positions are determined by means of the scanned images.

### DESCRIPTION OF THE INVENTION

### TECHNICAL PROBLEM

There is a need to be able to produce dental bridges, for instance, in a relatively technically simple and computerized manner. In this case it is important to be able to indicate correctly not only the different shapes of the dental bridges, but also the relationship between the parts, at the same times as an appropriate and rapid scanning function can be used. The invention solves this problem, among others. It is then important to bring each tooth-model or preparation into a good position where the tooth-model can be scanned by the used scanner without arising problems from for example undercuts. There is no solution to such a problem in the references mentioned above.

In the manufacture of dental products, it has been found to be advantageous to use a scanning unit in which the reading function (the beam, needle, etc) is directed obliquely to the axis of the respective dental bridge part, at the same time as the dental bridge part is rotated about its said axis. In this way it is possible to operate in the polar coordinates system, which reduces reading times, data quantities, etc., despite which complicated contours can also be read off. However, there is a clear problem in combining such a tracer principle with computer-aided construction in accordance with the above. The invention solves this problem too.

It is important that equipment known per se, such as scanning apparatuses, computers, computer programs, etc., can be used. Thus, for example, it is advantageous if standard software can be used. The invention also solves this problem and permits the use of CAD programs which are known per se for producing the product or construction.

### SOLUTION

The feature which can principally be regarded as characterizing for a method according to the invention is defined by a first step in which the mutual positions of the parts/preparations in the model are determined by means of a levelling apparatus which is functionally separate from the scanning unit and in which position data/position information items related to said mutual positions are generated, which position data/position information items are transmitted to the computer unit; and a second step in which the parts/preparations of the model are moved to the scanning unit and scanned for effecting the contour data/contour information items of the parts; and a third step in which said position data/position information items are run concurrently with the contour data/contour information items in the computer unit, whereby the operator of the computer unit can indicate both the contours and the mutual positions of the preparations in the construction.

Preferred embodiments of the novel method are evident from the attached sub-claims 2-7 related to the method.

The feature which can principally be regarded, as characterizing the novel device according to the present invention is evident from the characterizing clause of attached Patent Claim 8.

### ADVANTAGES

By means of what has been proposed above, reading equipment which is known at present can be used for inputting basic data for construction of bridges in a computer. By means of the invention, it is possible for data describing the positions of the individual preparations relative to one another to be collected along the scanning function.

### DESCRIPTION OF THE FIGURES

A presently proposed method and device according to the invention will be described hereinbelow, at the same time with reference to the attached drawings in which:
- Figures 1 - 7: show successive manufacturing stages for production of a construction unit based on a model, and
- Figure 8: shows, in circuit diagram form, processing stations included in processing equipment according to the invention.

### DETAILED EMBODIMENT

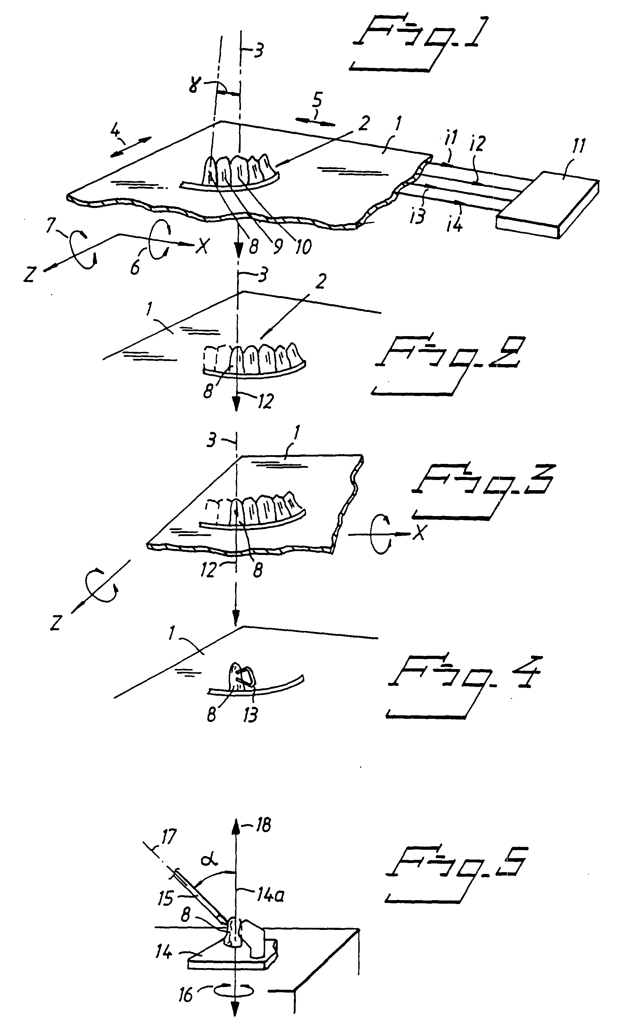

In Figure 1, reference number 1 indicates a plane which can consist of a support platform of a levelling apparatus known per se. A model 2 is applied on the platform. The plane or the platform has an axis 3 which extends at right angles to the plane 1. The axis 3 represents a reading position. The model is displaceably arranged on the platform in the directions of the arrows 4, 5. The platform operates with two axes which are at right angles to one another and which are here designated as the X and Z axes. The plane or the platform 1 can be turned about the said axes in the directions of the arrows 6 and 7. The model 2 includes a number of preparations 8, 9, 10, etc. The model can alternatively be fixed in the platform 1 in a manner known per se, in which case the platform in turn can be displaceable in the directions of the arrows 4 and 5. In this way, each preparation can be brought one at a time into line with the reading position which is represented by the line 3. Equipment 11 is in this case arranged to trace the X and Z positions as well as the current angles of rotation of the axes 6 and 7. The tracing can be effected in a manner known per se.

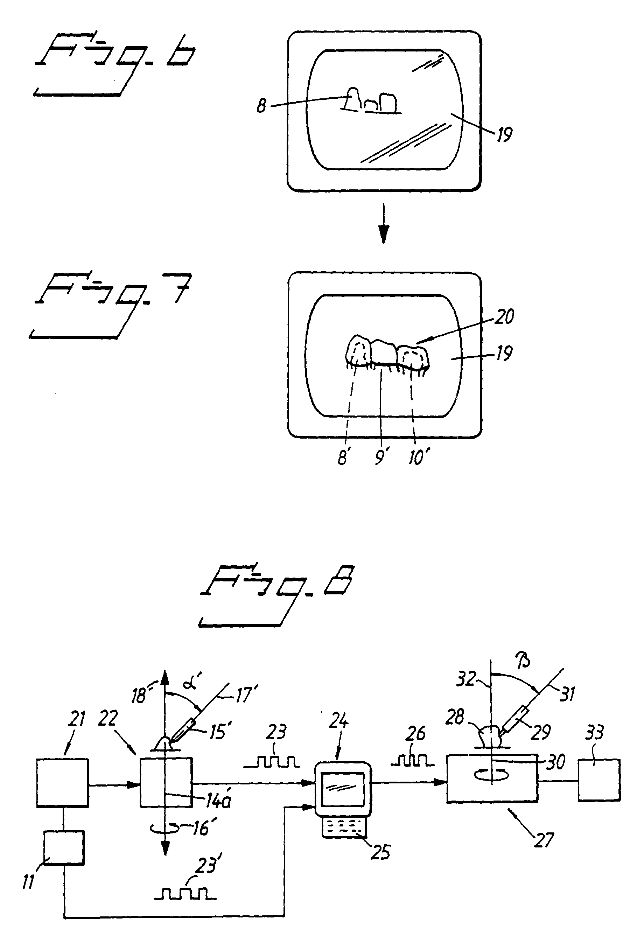

In Figure 2, the model 2 has been displaced with the aid of the platform 1 so that the axis 12 of the preparation 8 coincides with the axis 3 which represents the tracer position. This movement of the platform is indicated by tracer signals il and i2 in Figure 1, which tracer signals are input to the tracer equipment 11.

The next stage is to orient the preparation 8 in the vertical direction. According to Figure 1, the preparation is inclined in relation to the axis 3 by an angle gamma. This inclination can mean that undercuts and certain areas are inaccessible for the scanning which is effected in the subsequent operational step. There is therefore a need to carry out the said straightening of the preparation 8. In accordance with Figure 3, this is done by the plane 1 being turned about the axes X and Z. In this way, the axis 12 of the preparation 8 can be made to coincide fully with the axis 3 or to coincide essentially with this axis. These changes in the angle of rotation of the axes are represented in Figure 1 by signals i3 and i4. These signals too are recorded in the tracer equipment 11.

In accordance with Figure 4, the preparation 8 can be provided with a handle 13 or other gripping member, with which the preparation can be transferred to a scanning unit according to Figure 5. The scanning unit too has a rotating platform 14 on which the preparation 8 can be applied or fixed in a defined position. The scanning apparatus is of the type which has a tracer function 15 in the form of a needle, optical tracer, etc. A rotation arrow for the said platform 14 is indicated by 16. The longitudinal axis of the tracer member or tracer function is indicated by 17. The tracer apparatus is characterized by the fact that the platform 14 is rotated, at the same time as the tracer member 15 and the preparation 8 move reciprocally in the vertical direction 18. Either the platform can be stationary in the vertical direction and the tracer function can move in the vertical direction, or vice versa. Alternatively, both the platform and the tracer function can be vertically displaceable. The handle can be removed during this tracing operation. The attachment of the handle 13 can also be made on a part of the preparation which will not be traced by the scanning equipment, which means that the handle is not in the way.

Figure 6 shows a computer screen 19 of a computer which is known per se and which is used in this connection. The preparations forming part of the bridge or equivalent are transformed on the basis of the read-off data which is input to a random CAD program. On the said preparations, a bridge will be constructed in accordance with Figure 7. The construction procedure takes place in a manner known per se by interaction between the computer and a user or operator. In Figure 7, a bridge produced on the preparations 8', 9' and 10' is indicated by 20. The bridge is constructed and sectioned in the computer. The parts are then transformed back so that the milling takes place about the axis of rotation 14a which is used during the reading-off.

Figure 8 shows the entire chain of production. The levelling function described above is carried out at a first station. The said scanning function takes place at a second station 22. The axis of rotation is indicated by 14a'. The reference labels in other respects correspond to those which are used in Figure 5, but with a prime symbol added. The digital representation which is obtained from the scanning function is shown by 23 in Figure 8. The computer used in this connection is arranged at a station 24 and functions in accordance with the above. The computer is provided with a terminal 25 for the said interaction with a user. Machining or milling information is indicated by 26, and machining equipment by 27. The machining from a blank 28 also takes place in the polar coordinates system. A tool 29 is indicated in principle and symbolizes a milling cutter or other tool. The blank is rotated about a vertical axis 30. The axis 31 of the tool is inclined, in relation to the axis 32 of the blank, by an angle beta. In a preferred embodiment, the angle beta is the same size as the angle alpha and alpha'. The levelling equipment has the effect that the computer can be fed information which can relate to the said signals il, i2, i3 and i4, which information constitutes digital information 23'. The last-mentioned information is arranged too in files in association with the computer. The data in the files for the information 23, 23' is run concurrently and is used by the computer for producing the construction on the computer screen.

Since the reading-off function can read off only one preparation at a time, the data describing the mutual relationship between the preparations must therefore be collected in another apparatus in accordance with the above. This is called a levelling apparatus according to the above, since the rows of teeth can be straightened both as regards angle and translation.

Collection of the data which is required can be carried out in the following way:
1. The preparation in question is translated in the X and Z directions so that it is placed in the "read-off position" on the levelling platform.
2. The preparation is straightened by means of the platform being rotated about the X and Z axes so that it can be read off without any undercuts or the like arising.
3. The position of the preparation in the X and Z directions and also the angles about the X and Z axes are read off.
4. A "handle" is secured on the preparation. With the aid of the "handle", the preparation can be transferred easily to the reading-off function. The preparation is then read off in a known manner.

The data which has been read off in the levelling apparatus is now used for transforming the read-off files so that they can be seen in their correct positions in a random CAD program. The bridge can then be constructed in the CAD program using the input preparations as basis.

The bridge constructed in the CAD program is sectioned in the computer and is transformed back so that the production basis for the inner shapes of the included parts is milled about the centre of rotation with which they were read off. That is to say, the read-off file functions as production basis in the same way as for single crowns. This is to ensure that the transforms will not have an adverse effect on the accuracy. The accuracy requirements are lower as regards the outer shapes, which are thus those which are transformed.

The bridge parts are thereafter joined together in the usual way, by laser welding 33 in a known manner.

## Claims

1. Method for manufacturing a product which can be used in the human body, preferably a dental bridge, with the aid of a model (2) comprising different parts, for example preparations (8, 9, 10), and utilizing a scanning unit (14, 15) by means of which the contours of the parts are scanned and represented by electrical (digital) representations (23), and a computer unit (19, 25) having a computer screen which operates with data/information items which are related to the representations and therefore to said contours and which are arranged in files, and with the aid of a computer program, for example a CAD program, processes the said data in cooperation with an operator in order to represent, on the computer screen, a construction (20) which is based on the scanned representations, whereby processing information representing the said construction being obtained from the computer unit for use in equipment for manufacturing the product, characterized by
a) a first step in which the mutual positions of the parts/preparations (8, 9, 10) in the model are determined by means of a levelling apparatus which is functionally separate from the scanning unit and in which position data/position information items (23') related to said mutual positions are generated, which position data/position information items are transmitted to the computer unit,
b) a second step in which the parts/preparations (8, 9, 10) of the model are moved to the scanning unit and scanned for effecting the contour data/contour information items of the parts, and
c) a third step in which said position data/position information items are run concurrently with the contour data/contour information items in the computer unit (19, 25), whereby the operator of the computer unit (19, 25) can indicate both the contours and the mutual positions of the preparations in the construction (20).

2. Method according to Patent Claim 1, characterized in that the model is applied on a support platform of the levelling apparatus (1), in that the said parts/preparations (8, 9, 10) are brought one at a time to one or more reading-off positions on the support platform, in that the support platform is turned about two axes (x,z), which extend through the plane and are at right angles to one another, in order to provide for the respective part/preparation, a vertical position corresponding to a vertical scanning position in the scanning unit (14, 15) so that the latter is able to scan the whole contour of the respective part/preparation, and in that information on the position of the model (2) on said support platform and the said angles of rotation about the said axes (x,z) is supplied and is used by the computer unit (19, 25), in order to effect the determination of the correct mutual positions of the parts/preparations in the construction (20).

3. Method according to Patent Claim 1 or 2, characterized in that the respective part/preparation (8, 9, 10) is provided with a handle (13) or equivalent holding member, by means of which the part/preparation is transferred to the scanning unit (14, 15) for said scanning of the contour of the part/preparation.

4. Method according to Patent Claim 1, characterized in that the scanning unit (14, 15) operates with a scanning function along an axis (17) which is inclined in relation to the axis (14a) of the part/preparation, and in that the part/ /preparation is rotated about its axis (14a) during the scanning, at the same time as the part/preparation and/or the scanning unit (its scanning axis) moves in the vertical direction (18).

5. Method according to any one of the preceding patent claims, characterized in that the construction (20) produced using the program is sectioned in the computer unit (19, 25) and in that the machining information (26) includes information on the structure of the sections and their mutual positions/locations.

6. Method according to any one of the preceding patent claims, characterized in that the machining/milling is carried out in a similar way to the scanning of the preparation (8, 9, 10) of the respective section/part, and each scanning file can serve as production basis in the same way as in manufacture of individual parts/dental crowns, etc.

7. Method according to any one of the preceding patent claims, characterized in that the sections or the bridge parts are joined together by means of laser welding.

8. Device for manufacturing a product which can be used in the human body, preferably a dental bridge, with the aid of a model comprising different parts, for example preparations (8, 9, 10) and including a scanning unit (14,15) by means of which the contours of the parts can be scanned and represented by electrical (digital) representations (23), and a computer unit (19, 25) having a computer screen, which computer unit can receive the electrical representations (23) and stores in files data/information corresponding the electrical representations (23), and which computer unit can process i.a. said data/information by means of a computer program, for example a CAD-program, in cooperation with an operator when designing a construction (20) on the screen, whereby processing information (26) representing said construction can be transmitted to equipment (29, 33) for manufacturing of the product, characterized in that the device also comprises a levelling apparatus which operates separately from the scanning unit, in that the levelling apparatus having a support platform (1) adapted to receive the model (2) and allow side displacements (4, 5) of the model in order to make it possible to position each of the respective parts/preparations (8, 9 or 10) in read-off positions at the levelling apparatus/support platform, in that the support platform (1) also is adapted to be tiltable around two axes (x,z) extending through the platform and right angled to one another in order to make it possible to adjust the inclination of a respective part/preparation (8, 9 or 10) in said read-off position with aid of tiltings of the support platform around said axes (x, z), in that a tracer equipment (11) senses respective side displacement positions of the model and tilting positions of the support platform for each part/preparation (8, 9, 10) and obtains information (23') about these last mentioned positions to the computer unit individually and a further platform (14) included in said scanning unit, on which further platform (14) parts/preparations can be placed individually in a scanning position related to the position it had on the support platform of the levelling apparatus when sensed by said tracer equipment (11), and in that the information (23') obtained by the tracer equipment (11) is adapted to be used concurrently with said data/information by the computer unit (19, 25) in order to determine the correct mutual positions of the parts/preparations in the construction.

## Patentansprüche

1. Verfahren zur Herstellung eines im menschlichen Körper verwendbaren Produktes, vorzugsweise einer Zahnbrücke, mit Hilfe eines Modells (2) mit unterschiedlichen Teilen, z. B. Zahnaufbauten (8, 9, 10) und mittels einer Abtasteinheit (14, 15), mit der die Konturen der Teile abgetastet und durch elektrische (digitale) Darstellungen (23) dargestellt werden, und einer Computereinheit (19, 25) mit einem Computerbildschirm, der mit Daten/Informationsinhalten arbeitet, die auf die Darstellungen und damit die Konturen bezogen sind und in Dateien angeordnet sind, und der mittels eines Computerprogramms, z. B. eines CAD-Programms, die Daten in Zusammenarbeit mit einem Bediener verarbeitet, um auf dem Computerschirm eine Konstruktion (20) darzustellen, die auf den abgetasteten Darstellungen beruht, wobei von der Computereinheit eine die Konstruktion repräsentierende Verarbeitungsinformation enthalten wird, die in einer Einrichtung zur Herstellung des Produktes verwendbar ist, **gekennzeichnet** durch
a) einen ersten Schritt, in welchem die gegenseitigen Positionen der Teile/Aufbauten (8, 9, 10) in dem Modell mittels eines Nivellierapparats bestimmt werden, der funktional getrennt von der Abtasteinheit ist und in welchem den gegenseitigen Positionen zugeordnete Positionsdaten/Positionsinformations-Inhalte (23') erzeugt werden, die zu der Computereinheit übertragen werden,
b) einen zweiten Schritt, in dem die Teile/Aufbauten (8, 9, 10) des Modells zu der Abtasteinheit bewegt und abgetastet werden, um die Konturdaten/Konturinformations-Inhalte der Teile zu bewirken, und
c) einen dritten Schritt, in dem die Positionsdaten/Positionsinformations-Inhalte gemeinsam mit den Konturdaten/Konturinformations-Inhalten in der Computereinheit (19, 25) abgespielt werden, wobei der Bediener der Computereinheit (19, 25) sowohl die Konturen als auch die gegenseitigen Positionen der Aufbauten in der Konstruktion (20) anzeigen kann.

2. Verfahren nach Anspruch 1, dadurch **gekennzeichnet,** daß das Modell auf einer Tragplattform des Nivellierapparats (1) angeordnet wird, daß die Teile/Aufbauten (8, 9, 10) eines nach dem anderen in eine oder mehrere Ablesepositionen auf der Tragplattform gebracht werden, daß die Tragplattform um zwei Achsen (x, z) gedreht wird, die durch deren Ebene verlaufen und rechtwinklig zueinander sind, um für den jeweiligen Teil oder Aufbau eine Vertikalposition zu erhalten, die einer vertikalen Abtastposition in der Abtasteinheit (14, 15) entspricht, so daß die letztere die gesamte Kontur des betreffenden Teils/Aufbaus abtasten kann, und daß Information über die Position des Modells (2) auf der Tragplattform und über die Rotationswinkel um die Achsen (x, z) geliefert und von der Computereinheit (19, 25) verwendet wird, um die Bestimmung der korrekten gegenseitigen Positionen der Teile/Aufbauten in der Konstruktion (20) zu bewirken.

3. Verfahren nach Anspruch 1 oder 2, dadurch **gekennzeichnet,** daß der jeweilige Teil/Auf bau (8, 9, 10) mit einem Griff (13) oder entsprechendem Haltelement versehen ist, mit dem der Teil/Aufbau zu der Abtasteinheit (14, 15) für das Abtasten der Kontur des Teils/Aufbaus überführt wird.

4. Verfahren nach Anspruch 1, dadurch **gekennzeichnet,** daß die Abtasteinheit (14, 15) mit einer Abtastfunktion längs einer Achse (17) arbeitet, die zu der Achse (14a) des Teils/Aufbaus geneigt ist, und daß der Teil/Aufbau um seine Achse (14a) während des Abtastens rotiert wird und gleichzeitig der Teil/Aufbau und/oder die Abtasteinheit (ihre Abtastachse) in der Vertikalrichtung (18) bewegt wird.

5. Verfahren nach einem der vorangehenden Ansprüche, dadurch **gekennzeichnet**, daß die mittels des Programms erzeugte Konstruktion (20) in der Computereinheit (19, 25) sektioniert wird und daß die Bearbeitungsinformation (26) Informationen über die Struktur der Sektionen und ihre gegenseitigen Positionen/Stellungen enthält.

6. Verfahren nach einem der vorangehenden Ansprüche, dadurch **gekennzeichnet**, daß das Verarbeiten/Fräsen in ähnlicher Weise wie das Abtasten des Aufbaus (8, 9, 10) der jeweiligen Sektion/Teils durchgeführt wird und daß jede Abtastdatei als Produktionsbasis in gleicher Weise wie bei der Herstellung von einzelnen Teilen/Zahnkronen usw. dienen kann.

7. Verfahren nach einem der vorangehenden Ansprüche, dadurch **gekennzeichnet**, daß die Sektionen oder Brückenteile mittels Laserschweißung miteinander verbunden werden.

8. Vorrichtung zur Herstellung eines im menschlichen Körper verwendbaren Produktes, vorzugsweise einer Zahnbrücke, mit Hilfe eines Modells aus verschiedenen Teilen, z. B. Aufbauten (8, 9, 10), mit einer Abtasteinheit (14, 15), mit der die Konturen der Teile abgetastet und durch elektrische (digitale) Darstellungen (23) dargestellt werden können, und einer Computereinheit (19, 25) mit einem Bildschirm, die die elektrischen Darstellungen (23) empfangen kann und den elektrischen Darstellungen (23) entsprechende Daten/Informationen in Dateien speichert, wobei die Computereinheit u. a. die Daten/Informationen mittels eines Computerprogramms, z. B. eines CAD-Programms, in Kooperation mit einem Bediener beim Entwerfen einer Konstruktion (20) auf dem Bildschirm verarbeiten kann, wobei eine die Konstruktion darstellende Verarbeitungsinformation (26) zu einer Einrichtung (29, 33) zum Herstellen des Produktes übertragen werden kann, dadurch **gekennzeichnet**,
daß die Vorrichtung ferner einen Nivellierapparat aufweist, der separat von der Abtasteinheit arbeitet, daß der Nivellierapparat eine Tragplattform (1) für die Aufnahme des Modells (2) aufweist, der seitliche Verschiebungen (4, 5) des Modells ermöglicht, um jeden der jeweiligen Teile/Aufbauten (8, 9 oder 10) in eine Ableseposition auf dem Nivellierapparat bzw. der Tragplattform zu bringen, daß die Tragplattform (1) ferner um zwei Achsen (x, z) kippbar ist, die sich durch die Plattform und rechtwinklig zueinander erstrecken, um die Neigung eines jeweiligen Teils/Aufbaus (8, 9, 10) in der Ableseposition durch Kippen der Tragplattform um die Achsen (x, z) einzustellen, daß eine Erfassungeinrichtung (11) die jeweiligen zeitlichen Verschiebungspositionen des Modells und Kipp-Positionen der Tragplattform für jeden Teil/Aufbau (8, 9, 10) erfaßt und Information (23') über diese Positionen der Computereinheit einzeln zuführt, und eine in der Abtasteinheit enthaltene weitere Plattform (14), auf der Teile/Aufbauten einzeln in einer Abtastposition angeordnet werden können, die der Position zugeordnet ist, die sie auf der Tragplattform des Nivellierapparates beim Abtasten mittels der Erfassungseinrichtung (11) eingenommen hatten, und daß die von der Erfassungeinrichtung (11) erhaltene Information (23') gemeinsam mit den Daten/Informationen von der Computereinheit (19, 25) verwendet werden kann, um die korrekten gegenseitigen Positionen der Teile/Aufbauten in der Konstruktion zu bestimmen.

## Revendications

1. Procédé pour fabriquer un produit qui peut être utilisé dans le corps humain, de préférence un bridge dentaire, à l'aide d'un modèle (2) comportant différentes parties, par exemple des préparations (8, 9, 10), et utilisant une unité de balayage (14, 15) par l'intermédiaire de laquelle les contours des parties sont balayés et représentés par des représentations électriques (numériques) (23), et une unité informatique (19, 25) ayant un écran d'ordinateur qui fonctionne avec des éléments de données/informations qui sont associés aux représentations et par conséquent auxdits contours, et qui sont agencés en fichiers, et à l'aide d'un programme informatique, par exemple un programme CAO, qui traite lesdites données en coopération avec un opérateur afin de représenter, sur l'écran d'ordinateur, une construction (20) qui est basée sur les représentations balayées, de manière à traiter des informations représentant ladite construction qui est obtenue à partir de l'unité informatique pour être utilisée dans un équipement de fabrication du produit, caractérisé par
a) une première étape dans laquelle les positions mutuelles des parties/préparations (8, 9, 10) du modèle sont déterminées par l'intermédiaire d'un dispositif de mise à niveau qui est fonctionnellement séparé de l'unité de balayage et dans lequel sont générés des éléments de données de position/informations de position (23') associés auxdites positions mutuelles, lesquels éléments de données de position/informations de position sont transmis à l'unité informatique,
b) une deuxième étape dans laquelle les parties/préparations (8, 9, 10) du modèle sont déplacées vers l'unité de balayage et balayées pour réaliser les éléments de données de contour/informations de contour des parties, et
c) une troisième étape dans laquelle lesdits éléments de données de position/informations de position sont exécutés en même temps que les éléments de données de contour/informations de contour dans l'unité informatique (19, 25), de sorte que l'opérateur de l'unité informatique (19, 25) peut indiquer à la fois les contours et les positions mutuelles des préparations de la construction (20).

2. Procédé selon la revendication 1, caractérisé en ce que le modèle est appliqué sur une plate-forme de support du dispositif de mise à niveau (1), en ce que lesdites parties/préparations (8, 9, 10) sont amenées en une seule fois vers une ou plusieurs positions de lecture sur la plate-forme de support, en ce que la plate-forme de support est tournée autour de deux axes (X, Z), qui s'étendent à travers le plan et qui sont à angles droits l'un par rapport à l'autre, afin de fournir pour la partie/préparation respective, une position verticale correspondant à une position de balayage verticale de l'unité de balayage (14, 15) de sorte que cette dernière est capable de balayer le contour entier de la partie/préparation respective, et en ce que des informations concernant la position du modèle (2) sur ladite plate-forme de support et lesdits angles de rotation autour desdits axes (X, Z) sont délivrées et sont utilisées par l'unité informatique (19, 25), afin d'effectuer la détermination des positions mutuelles correctes des parties/préparations de la construction (20).

3. Procédé selon la revendication 1 ou 2, caractérisé en ce que la partie/préparation respective (8, 9, 10) est munie d'une poignée (13), ou d'un élément de support équivalent, par l'intermédiaire de laquelle la partie/préparation est transférée vers l'unité de balayage (14, 15) pour ledit balayage du contour de la partie/préparation.

4. Procédé selon la revendication 1, caractérisé en ce que l'unité de balayage (14, 15) fonctionne avec une fonction de balayage le long d'un axe (17) qui est incliné par rapport à l'axe (14a) de la partie/préparation, et en ce que la partie/préparation est mise en rotation autour de son axe (14a) pendant le balayage, en même temps que la partie/préparation et/ou l'unité de balayage (son axe de balayage) se déplacent dans la direction verticale (18).

5. Procédé selon l'une quelconque des revendications précédentes, caractérisé en ce que la construction (20) produite en utilisant le programme est sectionnée dans l'unité informatique (19, 25) et en ce que les informations d'usinage (26) comportent des informations concernant la structure des sections et leurs positions/emplacements mutuels.

6. Procédé selon l'une quelconque des revendications précédentes, caractérisé en ce que l'usinage/fraisage est effectué d'une manière similaire au balayage de la préparation (8, 9, 10) de la section/partie respective, et chaque fichier de balayage peut servir en tant que base de production de la même manière que dans la fabrication de parties/couronnes dentaires individuelles, etc.

7. Procédé selon l'une quelconque des revendications précédentes, caractérisé en ce que les sections ou les parties de bridge sont réunies ensemble par l'intermédiaire d'un soudage laser.

8. Dispositif pour fabriquer un produit qui peut être utilisé dans le corps humain, de préférence un bridge dentaire, à l'aide d'un modèle comportant différentes parties, par exemple des préparations (8, 9, 10) et incluant une unité de balayage (14, 15) par l'intermédiaire de laquelle les contours des parties peuvent être balayés et représentés par des représentations électriques (numériques) (23), et une unité informatique (19, 25) ayant un écran d'ordinateur, laquelle unité informatique peut recevoir les représentations électriques (23) et mémorise dans des fichiers des données/informations correspondant aux représentations électriques (23), et laquelle unité informatique peut traiter entre autres lesdites données/informations par l'intermédiaire d'un programme informatique, par exemple un programme CAO, en coopération avec un opérateur lors de la conception d'une construction (20) sur l'écran, de sorte que des informations de traitement (26) représentant ladite construction peuvent être transmises à un équipement (29, 33) pour la fabrication du produit, caractérisé en ce que le dispositif comporte également un dispositif de mise à niveau qui fonctionne séparément de l'unité de balayage, en ce que le dispositif de mise à niveau a une plate-forme de support (1) adaptée pour recevoir le modèle (2) et permettre des déplacements latéraux (4, 5) du modèle afin de rendre possible le positionnement de chacune des parties/préparations respectives (8, 9 ou 10) à des positions de lecture au niveau du dispositif de mise à niveau/plate-forme de support, en ce que la plate-forme de support (1) est également adaptée pour pouvoir s'incliner autour de deux axes (X, Z), s'étendant à travers la plate-forme et perpendiculaires l'un par rapport à l'autre afin de pouvoir ajuster l'inclinaison d'une partie/préparation respective (8, 9 ou 10) dans ladite position de lecture à l'aide des inclinaisons de la plate-forme de support autour desdits axes (X, Z), en ce qu'un équipement de traçage (11) détecte des positions de déplacement latéral respectives du modèle et des positions d'inclinaison de la plate-forme de support pour chaque partie/préparation (8, 9, 10) et obtient individuellement des informations (23') concernant ces positions dernièrement mentionnées dans l'unité informatique et une autre plate-forme (14) incluse dans ladite unité de balayage, sur laquelle autre plate-forme (14) peuvent être placées individuellement des parties/préparations à une position de balayage associée à la position qu'elles avaient sur la plate-forme de support du dispositif de mise à niveau lorsqu'elles sont détectées par ledit équipement de traçage (11), et en ce que les informations (23') obtenues par l'équipement de traçage (11) sont adaptées pour être utilisées en même temps que lesdites données/informations par l'unité informatique (19, 25) afin de déterminer les positions mutuelles correctes des parties/préparations de la construction.
